# EUROPEAN PATENT SPECIFICATION

(11) **EP 2 219 277 B1**
(45) Date of publication and mention of the grant of the patent: **11.07.2012**
(21) Application number: 09152673.1
(22) Date of filing: 12.02.2009
(51) Int. Cl.: H02J 3/38, H02J 3/18, H01F 27/00

(54) **AC-connection of an off-shore wind-park to an on-shore electricity grid**
AC-Verbindung für einen Off-Shore-Windpark für ein On-Shore-Energieversorgungsnetz
Connexion CA d'un parc éolien en mer à un réseau électrique sur terre

(43) Date of publication of application: 18.08.2010
(73) Proprietor: Viserge Ltd., Dublin 2 (IE)
(72) Inventor: Van Dyck, Marc, 1880 Kapelle-op-den-Bos (BE); Leuridan, Koen, 3200 Aarschot (BE)
(74) Representative: Gyi, Jeffrey Ivan

(56) References cited:
- EP-A- 1 508 951
- WO-A-2004/025803
- WO-A-2007/111541
- WO-A-2008/039121
- DE-A1-102005 043 422

## Description

### TECHNICAL FIELD

The present invention relates to an AC-connection of an off-shore wind-park to an on-shore electricity grid. The AC-connection is configured and coupleable to the on-shore electricity grid so that it meets the requirements imposed by the operator of the on-shore electricity grid. The invention further relates to the use of an AC-connection.

### BACKGROUND

Off-shore wind-parks are increasingly used to generate electrical power. The electrical power produced is fed to an on-shore electricity grid. An operator of an on-shore electricity grid imposes specific demands on its suppliers. Specifically, the off-shore wind-park coupleable/coupled to the on-shore electricity grid must meet imposed plant capability curves. Plant capability curves define the range of reactive power in function of active power output of the wind-park, considering the expected voltage variations of the electricity grid.

Particularly at switching-in, current and voltage transients can arise that are disturbing to the operation of the on-shore electricity grid. Hence, the demand on power quality is required not only during operation, but also at switching-in of a wind-park and its connecting sea-cable, to an on-shore electricity grid.

Traditionally the plant capability curve is met with the installation of separate Static VAR devices, based on power electronics. However, power electronics are vulnerable, especially for off-shore use.

Furthermore, on-shore components have to meet local legislation on environmental impact from substations, especially noise.

WO 2008/039121 describes an off-shore wind power plant. WO 2004/025803 describes a wind power fed electric network. These documents do not address active and reactive power production capabilities to provide a plant capability curve as imposed by an on-shore electricity grid.

DE 10043422 describes an off-shore wind-park connection to an electricity grid. WO 2007/111541 describes a device and a method for control of power flow in a transmission line. These documents however, remain silent about a booster transformer provided with an energy dissipating element, in particular a reactance, for acting on high-voltage switch-gear.

In view of the above, it is clear that a connection of an off-shore wind-park to an on-shore electricity grid must be designed to meet a multiple of requirements. There remains a need in the art for an improved connection of an off-shore wind-park to an on-shore electricity grid, which overcomes at least some of the above-mentioned problems.

### SUMMARY

The present invention concerns in a main embodiment, an AC-connection according to claim 1, comprising
an off-shore platform,
an on-shore substation coupled to said off-shore platform,
a sea-cable (19) coupling said off-shore platform to said on-shore substation, said AC-connection coupleable or coupled to an on-shore electricity grid with a high-voltage switch-gear
wherein,
said off-shore platform comprises
an electricity grid (21) operating at medium voltage,
a wind turbine generator (14), coupled to said electricity grid (21),
a shunt reactor (15), coupled to said electricity grid (21) operating at medium voltage,
a power step-up transformer (18), positioned between said electricity grid (21) and said sea-cable (19),
characterised in that
said turbine generator (14), said shunt reactor (15) and sea cable (19) of said AC-connection provide so that said active and reactive power production capabilities for obtaining a plant capability curve as imposed by said on-shore electricity grid onto said off-shore wind park switched-in to said on-shore electricity grid.

The present invention also concerns in a main embodiment, a method for operating an AC-connection according to claim 11, comprising the steps of:
- providing the AC connection, switched-in to an on-shore electricity grid (23)
- measuring active and reactive power flow between an off-shore wind-park and an on-shore electricity grid (23)
- comparing said reactive power flow with a reference set point
- based on said active and reactive power flow measurement and said reactive power flow comparison, sending a control signal to a controller (16) of a wind turbine generator (14) and a switch-gear of a shunt reactor on said off-shore wind-park
- adding or removing a fixed block of reactive power from said shunt reactor when said wind turbine generator runs out of its reactive power producing into a capability limit
- measuring voltage of an electricity grid (21) on said off-shore wind-park
- comparing measured voltage of said electricity grid with an operating voltage wherein said operating voltage is determined by the design of said off-shore electricity grid,
- based on said voltage comparison, sending a control signal to an on-load tap changer of a booster transformer that is connected to said on-shore grid (23) at its secondary side,
- following said control of said on-load tap changer, damping voltage variations of said on-shore electricity grid (23).

In particular, the present invention provides an alternating current (AC)-connection comprising an off-shore platform, an on-shore substation coupled to said off-shore platform, a sea-cable coupling said off-shore platform to said on-shore substation, said AC-connection coupleable or coupled to an on-shore electricity grid with a high-voltage switch-gear wherein, said off-shore platform comprises an off-shore electricity grid operating at medium voltage, a wind turbine generator, coupled to said off-shore electricity grid, a shunt reactor, coupled to said off-shore electricity grid operating at medium voltage, a power step-up transformer, positioned between said off-shore electricity grid and said sea-cable, so that the active and reactive power production capabilities of said AC-connection provide a plant capability curve as imposed by said on-shore electricity grid.

The inventors have found that with the selection and configuration of components the use of a separate static var device can be avoided. Further advantages are maximum reliability and minimum requirements for off-shore maintenance.

The present description discusses a booster transformer, said booster transformer comprises an intermediate circuit operating at medium-voltage, said intermediate circuit comprises an energy dissipating element switchable between an operational and non-operational condition.

Such a booster transformer has the advantage that it can be used for both raising or lowering the voltage of an electric circuit prior to its passage towards the on-shore grid through the high voltage circuit-breaker and to dampen current and voltage transients when closing the circuit-breaker to establish a coupling between the AC-connection and the on-shore electricity grid.

The term "*booster transformer*" refers to an electric transformer used to regulate the voltage of an electric circuit. The term "*switch-gear*" refers to an electrical switch-gear installation, in particular high-voltage switch-gear. Preferably, a high-voltage circuit-breaker is used as switch-gear.

In another aspect, the use of an AC-connection is described, as means for obtaining a plant capability curve imposed by an operator of an on-shore electricity grid on a wind-park coupled to said on-shore electricity grid with a high-voltage switch-gear.

Another aspect of the description is the use of a booster transformer according to the invention, as means for switching-in an AC-connection to an on-shore electricity grid.

The use of such a booster transformer has for effect that current and voltage transients are dampened. Use of a booster transformer provides a soft-closing scheme for connecting the off-shore wind-park to the on-shore electricity grid, whereby voltage and current transients are properly controlled.

The term "*switching-in*" in this context means making a connection through the manipulation of a switch-gear installation, e.g. by closing a high-voltage circuit-breaker so that an AC-connection is established between an off-shore wind-park and an on-shore electricity grid.

A method for operating an AC-connection according to the invention; may comprise the steps of:
- measuring active and reactive power flow between an off-shore wind-park and an on-shore electricity grid,
- comparing said active and reactive power flow with a reference set point,
- sending a control signal to a controller of a wind turbine generator and a switch-gear of a shunt reactor on said off-shore wind-park,
- adding or removing a fixed block of reactive power from said shunt reactor when said wind turbine generator runs out of its reactive power producing capability limit,
- measuring voltage of an off-shore electricity grid on said off-shore wind-park,
- comparing measured voltage of said off-shore electricity grid with the desired operating voltage as determined by the design of the system,
- sending a control signal to an on-load tap changer of a booster transformer.

Said method may comprise the steps of:
- measuring active and reactive power flow between an off-shore wind-park and an on-shore electricity grid,
- comparing said active and reactive power flow with a reference set point,
- based on said active and reactive power flow measurement and on said reactive power flow comparison sending a control signal to a controller of a wind turbine generator and a switch-gear of a shunt reactor on said off-shore wind-park,
- adding or removing a fixed block of reactive power from said shunt reactor when said wind turbine generator runs out of its reactive power producing capability limit,
- measuring voltage of an off-shore electricity grid on said off-shore wind-park,
- comparing measured voltage of said off-shore electricity grid with the desired operating voltage as determined by the design of the system,
- based on said voltage comparison sending a control signal to the on-load tap changer of the booster transformer, in particular to the on-load tap changer of the booster transformer that is connected to said off-shore wind park at its primary side and that is connected to said on-shore electricity grid on its secondary side.

With this method, the AC-connection is able to provide the plant capability curve as imposed by the operator of the on-shore electricity grid.

Another aspect of the description is a method for switching-in an AC-connection to an on-shore electricity grid with a booster transformer as described above, said method comprises the steps of:
- connecting an on-shore substation to a high-voltage switch-gear in an open position,
- connecting said high-voltage switch-gear on its opposite side to an on-shore electricity grid,
- connecting said on-shore substation to an off-shore wind-park,
- inserting said booster transformer between said high-voltage switch-gear and said off-shore wind-park,
- bringing said energy dissipating element in an operational condition,
- closing said high-voltage switch-gear,
- bringing said energy dissipating element in a non-operational condition.

With this method damping is provided to suppress the transients caused by the unfavorable switching-in of the capacitive sea-cable. This results in significant advantages in terms of the elimination or at least significant reduction of voltage and current transients in the network, as well as in terms of limiting electrodynamic and thermal stresses, with significant consequent benefits both for the insulation systems of the components present in the electrical system and of the switch-gear used, considerably increasing its useful life.

Another aspect of the description is a method for switching-in an off-shore electricity grid of an off-shore wind-park to an on-shore electricity grid, comprising the steps of:
- providing a booster transformer comprising an energy dissipating element in an intermediate circuit, wherein said energy dissipating element is switchable between an operational and non-operational condition and said intermediate circuit is operable at medium-voltage,
- connecting said booster transformer at its primary side to a sea-cable for transporting electricity produced in said off-shore wind-park to said on-shore electricity grid,
- connecting said booster transformer at its secondary side to a high-voltage switch-gear, wherein said high-voltage switch-gear is in an open position,
- connecting said high-voltage switch-gear to said on-shore electricity grid,
- switching said energy dissipating element to an operational condition,
- bringing said high-voltage switch-gear in a closed position,
- bringing said energy dissipating element in a non-operational condition, thereby providing said off-shore wind-park switched-in to said on-shore electricity grid.

The above described method may comprise the step of providing said booster transformer in an on-shore substation.

Another aspect of the description is a method for switching-in an off-shore electricity grid of an off shore wind-park to an on-shore electricity grid, comprises the steps of:
- providing a booster transformer comprising an energy dissipating element in an intermediate circuit, wherein said energy dissipating element is switchable between an operational and non-operational condition and said intermediate circuit operates at medium-voltage,
- connecting said booster transformer at its primary side to a sea-cable for transporting electricity produced in said off-shore wind-park to said on-shore electricity grid,
- connecting said booster transformer at its secondary side to a high-voltage switch-gear, wherein said high-voltage switch-gear is in an open position,
- connecting said high-voltage switch-gear to said on-shore electricity grid,
- switching said energy dissipating element to an operational condition,
- bringing said high-voltage switch-gear in a closed position,
- bringing said energy dissipating element in a non-operational condition, thereby providing said off-shore wind-park switched-in to said on-shore electricity grid.

Another aspect of the description is a booster transformer for switching-in an off-shore electricity grid of an off-shore wind-park to an on-shore electricity grid, wherein said booster transformer is connectable at its primary side to a sea-cable for transporting electricity produced in said off-shore wind-park to said on-shore electricity grid and at its secondary side connectable to a high-voltage switch-gear, said switch-gear in a closed position connects said off-shore wind park to said on-shore electricity grid, characterized in that, said booster transformer comprises an energy dissipating element in an intermediate circuit, wherein said energy dissipating element is switchable between an operational and non-operational condition and said intermediate circuit operates at medium-voltage.

The above described booster transformer may be connected at its primary side to a sea-cable for transporting electricity produced in said off-shore wind-park to said on-shore electricity grid and at its secondary side is connected to a high-voltage switch-gear, said switch-gear in a closed position connects said off-shore wind park to said on-shore electricity grid, characterized in that, said booster transformer comprises an energy dissipating element in an intermediate circuit, wherein said energy dissipating element is switchable between an operational and non-operational condition and said intermediate circuit operates at medium-voltage.

In the above described booster transformer, said energy dissipating element may be an alternating current (AC) resistance.

In the above described booster transformer, at least two medium-voltage circuit-breakers may be provided in said intermediate circuit for switching said energy dissipating element between an operational and non-operational condition.

In the above described booster transformer, said booster transformer may comprise an on-load tap changer.

An AC-connection, suitable for switching-in an off-shore electricity grid of an off-shore wind-park to an on-shore electricity grid, may comprise:
an off-shore platform,
an on-shore substation coupled to said off-shore platform, and
a sea-cable coupling said off-shore platform to said on-shore substation,
wherein said AC-connection is coupleable or coupled to an on-shore electricity grid with a high-voltage switch-gear, and
wherein said off-shore platform comprises
an electricity grid operating at medium voltage,
a wind turbine generator, coupled to said off-shore electricity grid,
a shunt reactor, coupled to said electricity grid operating at medium voltage,
a power step-up transformer, positioned between said electricity grid and said sea-cable, characterized in that,
said turbine generator, said shunt-reactor and said sea-cable of said AC-connection provide active and reactive power production capabilities for obtaining a plant capability curve as imposed by said on-shore electricity grid on said off-shore wind-park switched-in to said on-shore electricity grid; in particular, wherein said turbine generator, said shunt-reactor and said sea-cable of said AC-connection comprise active and reactive power production capabilities for obtaining a plant capability curve for said off-shore wind-park switched-in to said on-shore electricity grid equal to the plant capability curve of said on-shore electricity grid.

Said AC-connection may be coupled to an on-shore electricity grid with a high-voltage switch-gear.

said on-shore substation may comprise said high-voltage switch-gear.

Said off-shore platform may be coupled to said sea-cable with a power step-up transformer with a fixed ratio.

constant voltage. Said sea-cable may be operated at a constant voltage.

Said plant capability curve may be met by the reactive power production capabilities of said sea-cable, wind-park generator and shunt-reactor.

Said on-shore substation may comprise a booster transformer.

Said booster transformer may be a booster transformer as described else where herein.

Said on-shore substation may comprise a reactive power control system.

Said off-shore platform may comprise switch-gear all operating at medium-voltage.

A method for operating an off-shore electricity grid of an off-shore wind-park switched-in to an on-shore electricity grid, may comprise the steps of:
- providing an AC-connection as described above, switched-in to an on-shore electricity grid,
- measuring active and reactive power flow between an off-shore wind-park and said on-shore electricity grid,
- comparing said reactive power flow with a reference set point,
- based on said active and reactive power flow measurement and said reactive power flow comparison, sending a control signal to a controller of a wind turbine generator and a switch-gear of a shunt reactor on said off-shore wind-park,
- adding or removing a fixed block of reactive power from said shunt reactor when said wind turbine generator runs out of its reactive power producing capability limit,
- measuring voltage of said off-shore electricity grid on said off-shore wind-park,
- comparing measured voltage of said off-shore electricity grid with an operating voltage, wherein said operating voltage is determined by the design of said off-shore electricity grid,
- based on said voltage comparison, sending a control signal to the on-load tap changer of the booster transformer that is connected to said off-shore wind-park at its primary side and that is connected to said on-shore grid at its secondary side,
- following said control of said on-load tap changer, damping voltage variations of said on-shore electricity grid.

An AC-connection may be used for obtaining a plant capability curve as imposed by an on-shore electricity grid on an off-shore electricity grid of an off-shore wind-park.

Said AC-connection may be used for obtaining a plant capability curve for said off-shore wind-park, wherein said plant capability curve equals the plant capability curve of said on-shore electricity grid the off-shore wind-park is switched-in to.

With the insight to better show the characteristics of the invention, some preferred embodiments and examples are described hereafter referring to the enclosed figures.

### FIGURE LEGEND

**Figure 1** shows a single line diagram representing an embodiment of an AC-connection according to the present invention.
**Figure 2** represents a booster transformer according to the prior art.
**Figure 3** represents an embodiment of a booster transformer according to the present invention. The circuit-breakers in the booster transformer are represented in the condition before switch-in of a sea-cable and off-shore wind-park to an on-shore electricity grid.
**Figure 4** represents an embodiment of a booster transformer according to the present invention, switched to a transition situation.
**Figure 5** represents an embodiment of a booster transformer according to the present invention, in its normal operating condition. That is, the AC-connection is switched-in to the on-shore electricity grid.

### DETAILED DESCRIPTION OF THE INVENTION

Before the present methods and devices used in the invention are described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of". The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

All documents cited in the present specification are hereby incorporated by reference in their entirety.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

### AC-connection

The invention is directed to an alternating current (AC)-connection between an off-shore wind-park and an on-shore electricity grid. The facilities needed to connect an off-shore wind-park to the on-shore grid consist of an off-shore platform, an AC sea-cable and an on-shore substation.

The off-shore platform comprises a wind-mill comprising a wind turbine generator. The wind turbine generator is coupled to an off-shore electricity grid located on the off-shore wind-park. A shunt reactor is also coupled to this off-shore electricity grid. The off-shore electricity grid operates at medium voltage. The off-shore electricity grid is connected to the sea-cable, typically operating at high-voltage for example 150 kV, via a power step-up transformer. This AC-connection is coupleable or coupled to an on-shore electricity grid. The inventors have found that their AC-connection is such that active and reactive power production capabilities of the selected configuration of elements is able to provide a plant capability curve as imposed on a wind-park coupled to an on-shore electricity grid, by an operator of an on-shore electricity grid. The use of Static var devices either on-shore or off-shore is avoided. At least, a solution without Static VAR avoids the drawback of harmonic pollution by the power electronic switching elements.

By "*plant capability curve*" is meant the capability of the wind-park to generate reactive power or Mvar in function of the total output power or MVA. The term "*Mvar*" refers to the reactive power output of the wind-park. Mvar stands for Mega Volt Ampere Reactive.

The inventors have found that with their selection and configuration, the installation and use of separate Static var equipment for the production of active and reactive power could be avoided.

In a preferred embodiment, an AC-connection comprises a single high-voltage switch-gear, for example a circuit-breaker, on-shore. The inventors have found that high-voltage switch-gear could be moved on-shore, particularly to the on-shore substation, thus avoiding the use of high-voltage equipment off-shore. This is very valuable since all maintenance taking place at sea is expensive and difficult to perform. Moreover, switch-gear at high-voltage requires a lot of space. This is to be avoided off-shore. Consequently, the invention provides an AC-connection wherein the on-shore substation comprises a high-voltage switch-gear.

In a more preferred embodiment, the medium-voltage off-shore grid is connected to the high-voltage sea-cable by means of a power step-up transformer with a fixed ratio. The absence of on-load voltage regulation in the power step-up transformer further reduces off-shore maintenance requirements and costs. Consequently, the invention provides an AC-connection wherein the off-shore platform is coupled to the sea-cable with a power step-up transformer with a fixed ratio.

In another preferred embodiment, the plant capability curve is met by the reactive power production capabilities of said sea-cable, wind-park generator and shunt-reactor.

By the term "*shunt-reactor*" is meant a reactor that has a relatively high inductance and is wound on a magnetic core containing an air gap; used to neutralize the charging current of the line to which it is connected.

The plant capability curve is met uniquely with the Mvar production capabilities of the sea-cable, the wind-park generators and eventually one or more conventional shunt-reactors installed on the off-shore platform and connected to the medium-voltage grid of the wind-park. Consequently, there is no need for noisy shunt reactors on shore. This helps very much in realizing the nowadays severe restrictions on noise production from on-shore electricity substations. The cost and the mass of a shunt-reactor increase indeed dramatically if it must be designed with a reduced sound level. The shunt-reactors installed on the off-shore platform can be made very cost-effective as they do not face any noise limit.

In another preferred embodiment, the AC-connection comprises a reactive power adjustment system at the on-shore grid side of the device. This system couples the setting of a desired power factor to a voltage control method. The desired power factor is set by the operator of the on-shore electricity grid. By power factor is meant the ratio of the real power to the apparent power produced by the wind-park. Consequently, the invention provides an AC-connection, with an on-shore substation comprising a reactive power adjustment system.

In a preferred embodiment, the control system of the AC-connection consists of a voltage and a Mvar controller. Preferably it is housed in the on-shore substation. The Mvar controller generates the necessary control signals towards the wind turbine generators and the circuit-breakers of the additional shunt-reactors in order to meet the imposed production or absorption of reactive power. The voltage controller generates the control signal towards the on-load tap changer of the booster transformer in order to maintain the constant medium-voltage level on the off-shore grid.

By the term "*on-load tap changer*" it is meant, a device comprising a connection point along a transformer winding that allows a certain number of turns to be selected. By means of a tap changer, a transformer with a variable turns ratio is produced enabling voltage regulation of the output. On-load tap changers (OLTC) allow for automatic voltage adjustment and function as a voltage regulator.

In a preferred embodiment, said on-shore substation of the AC-connection comprises a booster transformer. In the on-shore substation, the high-voltage sea-cable is directly connected to the primary side of a booster transformer. At its secondary side, the booster transformer is connected to the high-voltage grid via a high-voltage circuit-breaker. With the booster transformer the voltage regulation function is realized on-shore, instead of off-shore in the transformer located on the off-shore wind-park. The main power step-up transformer installed on the off-shore wind-park is a simple transformer without on-load voltage regulation. This configuration significantly reduces the amount of vulnerable and maintenance requiring equipment located off-shore. This is very valuable since all maintenance taking place at sea is expensive and difficult to perform. Another advantage of an AC-connection in which the voltage regulating function is installed on-shore, separate from the main step-up transformer, is that the sea-cable can be operated at a constant voltage.

In a preferred embodiment, the sea-cable is operated at constant voltage. This results in a constant production of capacitive reactive power. This in turn facilitates the overall Mvar control of an installation.

In another preferred embodiment, said booster transformer comprises an intermediate circuit operating at medium-voltage. In absence of such a booster transformer, damping could only be realized by the temporary insertion of high-voltage resistors in the high-voltage connection between sea-cable and on-shore grid. The cost of such a solution is however much higher: because of the high-voltage class of resistors and switch-gear but also because of the important space requirements to install these high-voltage components in the on-shore substation. The presence of an internal circuit at medium-voltage inside the booster transformer is highly beneficial. It creates the possibility for a very cost effective implementation of a soft-closing system to reduce the size and the duration of current and voltage transients after connection to the grid of the mainly capacitive sea-cable and the inductive components (main step-up transformer and shunt-reactors) on the off-shore platform.

In a more preferred embodiment, said booster transformer of the AC-connection comprises a conventional on-load tap changer. This has for effect that a constant voltage of the off-shore medium-voltage grid can be maintained irrespective of voltage variations on the on-shore electricity grid.

In a preferred embodiment, the off-shore platform comprises switch-gear all operating at medium-voltage.

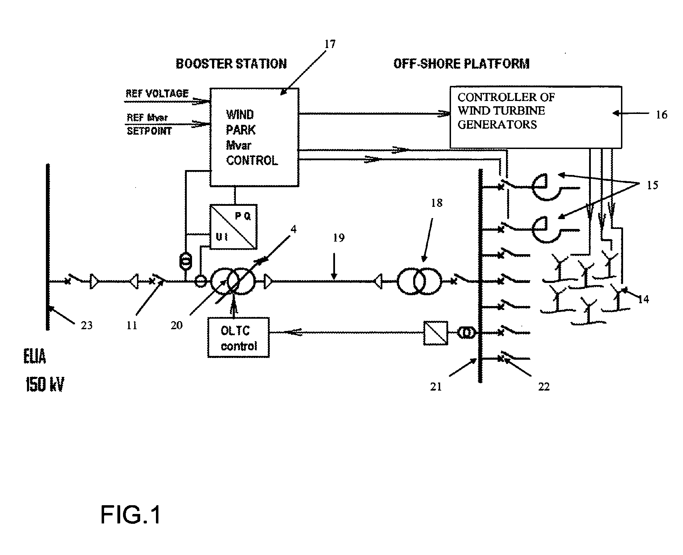

An example of a preferred embodiment is schematically illustrated in Figure 1.

Wind turbine generators 14 in an off-shore wind-park 50 are connected to an off-shore medium-voltage grid 21 via medium-voltage circuit-breakers 22. A power step-up transformer 18 links the off-shore medium-voltage grid 21 to the high-voltage sea-cable 19. In an on-shore substation 45, a modified booster transformer 20 with on-load tap changer (OLTC) 4 connects the sea-cable 19 with a high-voltage utility grid 23 via a high-voltage circuit-breaker 11. The high-voltage circuit-breaker 11 between a booster transformer 20 and the utility grid is the only high-voltage switch-gear needed in an AC-connection according to the invention. The required generation or absorption of reactive power Mvar comes from the Mvar capability of the wind turbine generators 14, the sea-cable 19 and one or more off-shore medium-voltage shunt reactors 15.

The sea-cable 19, typically operating at high-voltage for example 150 kV, is connected directly and without high-voltage circuit-breaker to the secondary side of the power step-up transformer 18. The primary side of the step-up transformer 18 is connected to the off-shore medium-voltage grid 21, typically 36 kV or less, via a medium-voltage circuit-breaker 22. The wind turbine generators 14 deliver their power to this medium-voltage grid 21. The main power step-up transformer 18 has a fixed ratio, without on-load tap changer. On the off-shore platform 30, one or more conventional shunt-reactors 15 are connected to the medium-voltage grid 21 with medium-voltage circuit-breakers 22.

### Booster transformer

A booster transformer is further described herein that comprises an intermediate circuit operating at medium-voltage, said intermediate circuit comprises an energy dissipating element switchable between an operational and non-operational condition.

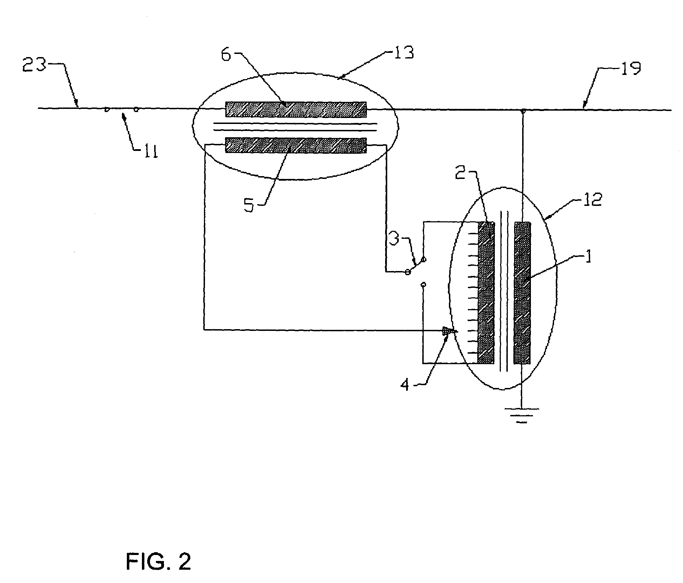

Figure 2 represents a booster transformer according to the state-of-the art. It consists of two active parts: an exciting transformer 12 and a series transformer 13, each with a primary and secondary winding. The primary winding 1 of the exciting transformer 12 is directly connected to the high-voltage sea-cable 19. The secondary winding 2 of the exciting transformer 12 is a tapped winding. The selection of a tap on the tapped winding 2 is made with the on-load tap changer 4 in function of the regulation of the voltage level on the off-shore medium-voltage grid. The tapped winding 2 feeds the primary winding 5 of the series transformer 13. The secondary winding 6 of the series transformer 13 is connected between the on-shore high-voltage electricity grid 23 and the sea-cable 19. In function of the position of the preselector 3, also part of the on-load tap changer 4, the voltage induced on the winding 6 can be increased or decreased.

A conventional booster transformer may be modified so that it can be used to control the voltage and current transients after switching-in of a AC-connection between the on-shore electricity grid and a wind-park.

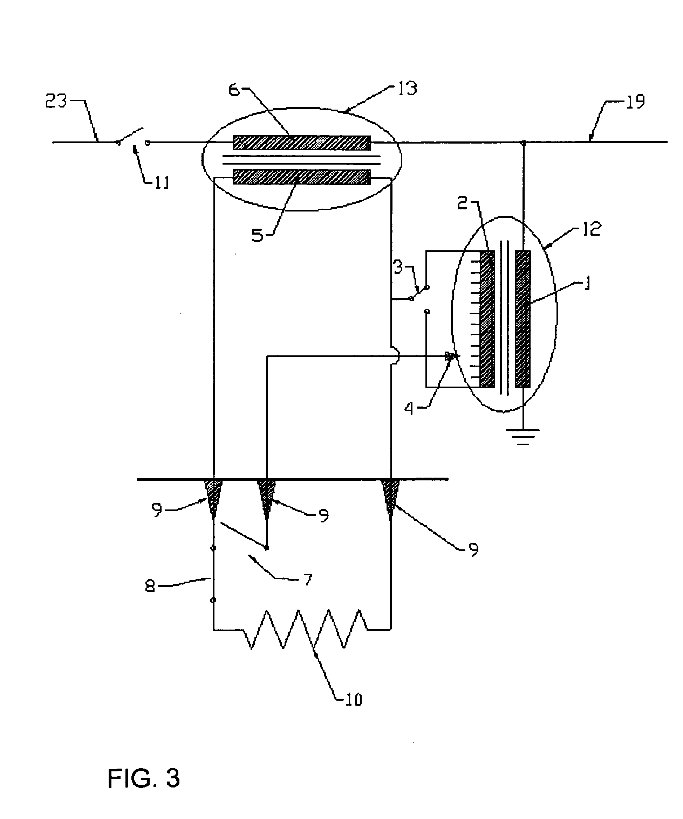

An example is schematically illustrated in Figure 3. Such a booster transformer 20 can be obtained as follows: the circuit of a booster transformer according to the state-of-the art is opened between the lines 60, 61 connecting the primary winding 5 of the series transformer 13 with the tapped winding 2 of the exciting transformer 12. The circuit is brought outside a tank with medium-voltage bushings 9. An intermediate circuit comprising energy dissipating element 10 and two circuit-breakers 7, 8 is inserted between the series transformer 13 and the exciting transformer 12. A first and second bushing connected with a first circuit-breaker 7, are inserted in the circuit connecting the primary winding 5 of the series transformer 13 to the on-load tap changer 4. The first bushing is connected to a resistor 10 with a second circuit-breaker 8. The resistor is connected in series to a third bushing 9. The third bushing 9 is connected to the circuit running from the primary winding of the series transformer 13 to the preselector 3. The energy dissipating element 10 will add the necessary dissipation to limit the magnitude and duration of transients after switching-in. Two medium-voltage circuit-breakers 7, 8 control the insertion of the energy dissipating element 10 into the intermediate circuit. It can now be used to raise the voltage of an electric circuit and to dampen current and voltage transients.

### Use of AC-connection according to the invention

In another aspect, the present invention provides the use of an AC-connection according to the invention, as means for obtaining a plant capability curve imposed by an operator of an on-shore electricity grid on an off-shore wind-park coupled to said on-shore electricity grid.

### Use of booster transformer

In another aspect, a booster transformer is described, to control the voltage and current transients after switching-in of an AC-connection to an on-shore electricity grid. With a booster transformer a soft closing of a high-voltage circuit-breaker is obtained, by only adding medium-voltage equipment. In the invention the intermediate circuit at medium-voltage, comprising an energy dissipating element such as a resistor, realizes the soft-closing of the high-voltage circuit-breaker. Current and voltage transients caused by switching-in are reduced to the limits imposed by the voltage and current protection of the electrical system.

Without a booster transformer as described herein such a damping could only be realized by the temporary insertion of high-voltage resistors in the high-voltage connection between sea-cable and on-shore grid. The cost of such a solution is however much higher: because of the high-voltage class of resistors and switch-gear but also because of the important space requirements to install these high-voltage components in the on-shore substation.

### Method for operating an AC-connection according to the invention

In yet another aspect, the present invention provides a method for operating an AC-connection 40. It can be displayed as follows, referring to Figure 1. Active and reactive power, are measured at the grid side of the modified booster transformer 20 and compared with a reference Mvar set point imposed by the utility dispatcher. In function of the difference between measured and required Mvar production, the reactive power adjustment system 17, also called master Mvar controller, in the substation, generates control signals towards the wind turbine generator management module 16 and the switch-gear of the eventual medium-voltage shunt reactors 15 on the off-shore platform. Continuous control acts on the wind turbine generator converter modules. When the wind turbine generators run out of their reactive power producing capability limit, the control range is shifted by adding or removing fixed Mvar blocks of the shunt reactors 15. At the same time, the voltage of the off-shore grid 21 is measured for control of the on-load tap changer OLTC 4 of the modified booster transformer 20, thereby compensating for the voltage variations of the on-shore high-voltage grid.

By the term "reactive power producing capability limit of the generators" is meant the range of capacitive or inductive reactive power that the generators can produce in function of the active power output.

### Method for switching-in an AC-connection

In yet another aspect, a method for switching-in an AC-connection 40 to an on-shore electricity grid 23 with the aforementioned booster transformer 20 is described herein.

Medium-voltage resistors are temporarily inserted into an intermediate circuit 35 using relatively cheap medium-voltage circuit-breakers. As an effect excessive current and voltage transients after switching in the off-shore wind-park 50 and its AC-connection (sea-cable, transformers, reactors and wind turbine generators) are suppressed. For the steady-state operation of the AC-connection, the resistors are automatically taken out of the circuit by proper switching of the breakers. The method is illustrated in Figure 3 to 5.

The breakers in Figure 3 are represented in the condition before switch-in of the sea-cable and off-shore wind-park 50. High-voltage breaker 11 is open. Medium-voltage breaker 7 is open and breaker 8 is closed. An inrush current will flow through the winding 6 after closing of the breaker 11. It will induce a current through the winding 5 and through the energy dissipating element 10.

The voltage class of the windings 2, 5, connecting the two active parts, is optimized in function of the selection of the on-load tap changer 4. It will typically be a medium-voltage class, not above 36 kV. The selection of medium-voltage class components for the intermediate circuit 35 of the booster transformer 20 is highly beneficial. It creates the possibility for a very cost effective implementation of a soft-closing system to reduce the size and the duration of current and voltage transients after connection to the grid of the mainly capacitive sea-cable and the inductive components (main step-up transformer and shunt-reactors) on the off-shore platform.

The problem is that a smooth inrush of the inductive components requires a controlled switching-in at the peak of the voltage but unfortunately, this is the worst condition to switch in the capacitive sea-cable. A good compromise is not possible. The method therefore foresees to apply switching at peak voltage and to provide sufficient damping to suppress the transients caused by the unfavorable switching-in of the capacitive sea-cable.

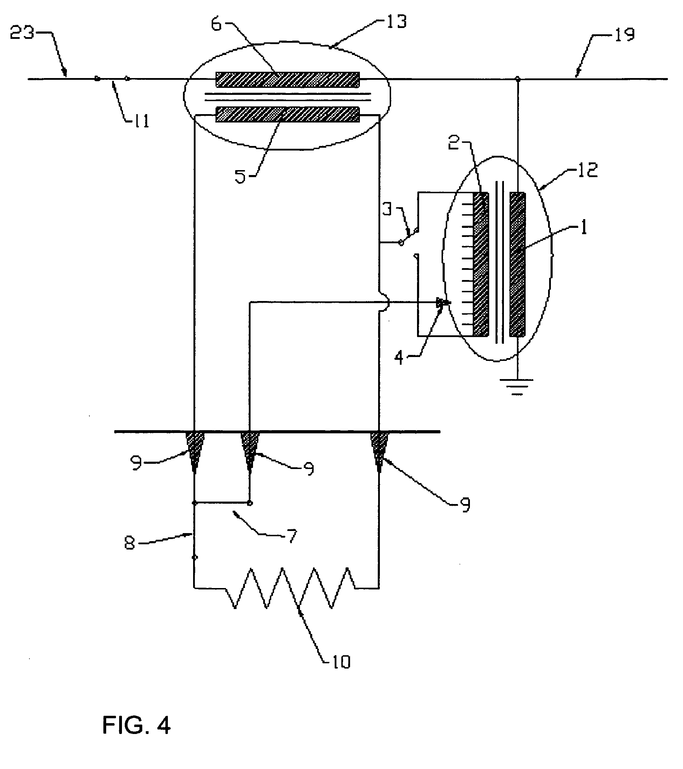

Shortly after the inrush, the installation will switch to the situation represented in **Figure 4****.** The high-voltage breaker 11 and the medium-voltage breaker 7 are closed.

The short passage through the make-before-break condition represented in **Figure 4** is essential to maintain a path for the current induced through the primary winding 5 of the series transformer 13.

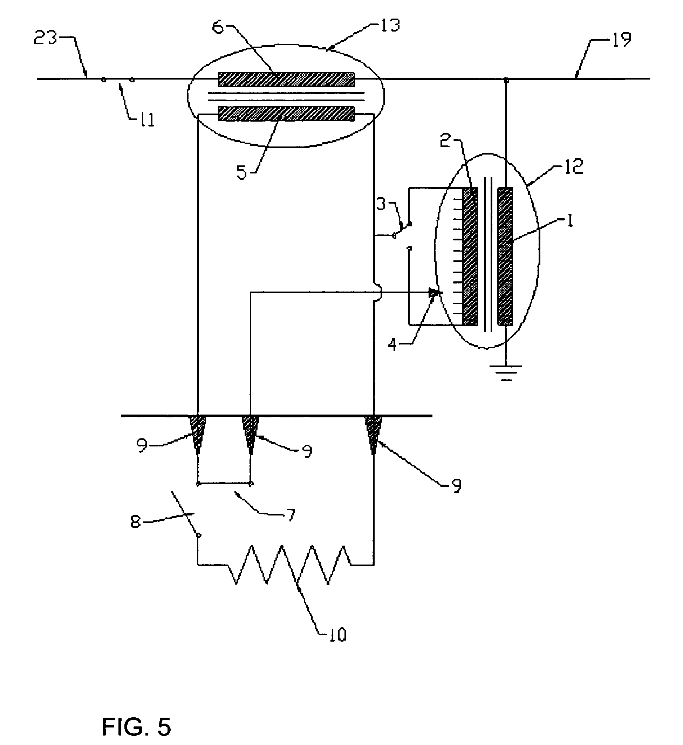

Finally, breaker 8 opens, isolating the energy dissipating element 10, preferably a resistor, from the booster transformer circuit. The booster transformer 20 as represented in **Figure 5** is now in its normal operating condition. The off-shore wind-park 50 is coupled to the on-shore electricity grid 23 using a booster transformer 20 according to an embodiment of the invention.

Preferably, the method further comprises a switching-in at peak voltage to establish an AC-connection.

## Claims

1. AC-connection comprising
an off-shore platform,
an on-shore substation coupled to said off shore platform,
a sea-cable (19) coupling said off-shore platform to said on-shore substation,
said AC-connection coupleable or coupled to an on-shore electricity grid with a high-voltage switch-gear
wherein,
said off-shore platform comprises
an electricity grid (21) operating at medium voltage,
a wind turbine generator (14), coupled to said electricity grid (21),
a shunt reactor (15), coupled to said electricity grid (21) operating at medium voltage,
a power step-up transformer (18), positioned between said electricity grid (21) and said sea-cable (19),
**characterised in that**
said turbine generator (14), said shunt reactor (15) and sea cable (19) of said AC-connection provide active and reactive power production capabilities for obtaining a plant capability curve as imposed by said on-shore electricity grid onto said off-shore wind park switched-in to said on-shore electricity grid.

2. AC-connection as in claim 1, **characterized in that**, said on-shore substation comprises said high-voltage switch-gear.

3. AC-connection as in claim 1 or 2, **characterized in that**, said off shore platform is coupled to said sea-cable with a power step-up transformer with a fixed ratio.

4. AC-connection as in any of the above claims, **characterized in that**, said sea-cable (19) is operated at a constant voltage.

5. AC-connection as in any of the above claims, **characterized in that**, said on-shore substation comprises a booster transformer (20).

6. AC-connection as in claim 5, **characterized in that**, said booster transformer (20) comprises an intermediate circuit operating at medium-voltage.

7. AC-connection as claim 5 or 6, **characterized in that**, said booster transformer (20) comprises an on-load tap changer.

8. AC-connection as in any of the above claims, **characterized in that**, said on-shore substation comprises a reactive power control system (16).

9. AC-connection as in any of the above claims, **characterized in that**, said off-shore platform comprises switch-gear all operating at medium-vottage.

10. Use of an AC-connection as in claims 1-9, as means for obtaining a plant capability curve imposed by an operator of an on-shore electricity grid on a wind-park coupled to said on-shore electricity grid.

11. Method for operating an AC-connection as in claims 1-9, comprising the steps of :
- providing an AC connection of any of claims 1 to 9, switched-in to an on-shore electricity grid (23)
- measuring active and reactive power flow between an off-shore wind-park and an on-shore electricity grid (23)
- comparing said reactive power flow with a reference set point
- based on said active and reactive power flow measurement and said reactive power flow comparison, sending a control signal to a controller (16) of a wind turbine generator (14) and a switch-gear of a shunt reactor on said off-shore wind-park
- adding or removing a fixed block of reactive power from said shunt reactor when said wind turbine generator runs out of its reactive power producing into a capability limit
- measuring voltage of an electricity grid (21) on said off-shore wind-park
- comparing measured voltage of said electricity grid with an operating voltage wherein said operating voltage is determined by the design of said off-shore electricity grid,
- based on said voltage comparison, sending a control signal to an on-load tap changer of a booster transformer that is connected to said on-shore grid (23) at its secondary side,
- following said control of said on-load tap changer, damping voltage variations of said on-shore electricity grid (23).

## Patentansprüche

1. AC-Anschluss, umfassend:
eine Offshore-Plattform,
eine Festlandumspannstation, die mit der Offshore-Plattform gekoppelt ist,
ein Seekabel (19), das die Offshore-Plattform mit der Festlandumspannstation koppelt,
wobei der AC-Anschluss an ein Festlandstromnetz mit einer Hochspannungsschaltanlage koppelbar oder gekoppelt ist,
wobei die Offshore-Plattform Folgendes umfasst:
ein Stromnetz (21) das auf Mittelspannung funktioniert,
einen Windturbinengenerator (14), der mit dem Stromnetz (21) gekoppelt ist,
eine Kompensationsdrosselspule (15), die mit dem Stromnetz (21) gekoppelt ist, das auf Mittelspannung funktioniert,
einen Hochsetzsteller (18), der zwischen dem Stromnetz (21) und dem Seekabel (19) positioniert ist,
**dadurch gekennzeichnet, dass** der Turbinengenerator (14), die Kompensationsdrosselspule (15) und das Seekabel (19) des AC-Anschlusses Produktionsfähigkeiten für Wirk- und Blindleistung bereitstellen, um eine Anlagenleistungskurve zu erzielen, wie sie von dem Festlandstromnetz für den Offshore-Windpark vorgeschrieben ist, der in das Festlandstromnetz eingeschaltet ist.

2. AC-Anschluss nach Anspruch 1, **dadurch gekennzeichnet, dass** die Festlandumspannstation die Hochspannungsschaltanlage umfasst.

3. AC-Anschluss nach Anspruch 1 oder 2, **dadurch gekennzeichnet, dass** die Offshore-Plattform mit dem Seekabel über einen Hochsetzsteller mit festem Verhältnis gekoppelt ist.

4. AC-Anschluss nach einem der vorhergehenden Ansprüche, **dadurch gekennzeichnet, dass** das Seekabel (19) auf einer konstanten Spannung funktioniert.

5. AC-Anschluss nach einem der vorhergehenden Ansprüche, **dadurch gekennzeichnet, dass** die Festlandumspannstation einen Zusatztransformator (20) umfasst.

6. AC-Anschluss nach Anspruch 5, **dadurch gekennzeichnet, dass** der Zusatztransformator (20) einen Zwischenkreis umfasst, der auf Mittelspannung funktioniert.

7. AC-Anschluss nach Anspruch 5 oder 6, **dadurch gekennzeichnet, dass** der Zusatztransformator (20) einen Stufenschalter umfasst.

8. AC-Anschluss nach einem der vorhergehenden Ansprüche, **dadurch gekennzeichnet, dass** die Festlandumspannstation ein Blindleistungssteuersystem (16) umfasst.

9. AC-Anschluss nach einem der vorhergehenden Ansprüche, **dadurch gekennzeichnet, dass** die Offshore-Plattform Schaltanlagen umfasst, die alle auf Mittelspannung funktionieren.

10. Verwendung eines AC-Anschlusses nach Anspruch 1 bis 9 als Mittel zum Erzielen einer Anlagenleistungskurve, die von einem Betreiber eines Festlandstromnetzes für einen Windpark vorgeschrieben ist, der mit dem Festlandstromnetz gekoppelt ist.

11. Verfahren zum Betreiben eines AC-Anschlusses nach Anspruch 1 bis 9, umfassend folgende Schritte:
- Bereitstellen eines AC-Anschlusses nach einem der Ansprüche 1 bis 9, der an ein Festlandstromnetz (23) angeschaltet ist,
- Messen des Wirk- und Blindleistungsflusses zwischen einem Offshore-Windpark und einem Festlandstromnetz (23),
- Vergleichen des Blindleistungsflusses mit einem Bezugssollwert,
- basierend auf der Messung des Wirk- und Blindleistungsflusses und dem Vergleich des Blindleistungsflusses Senden eines Steuersignals an ein Steuergerät (16) eines Windturbinengenerators (14) und einer Schaltanlage einer Kompensationsdrosselspule in dem Offshore-Windpark,
- Hinzufügen oder Entfernen eines festen Blindleistungsblocks zu bzw. von der Kompensationsdrosselspule, wenn der Windturbinengenerator seine Blindleistung verbraucht und die Produktion sich einer Leistungsgrenze nähert,
- Messen der Spannung eines Stromnetzes (21) in dem Offshore-Windpark,
- Vergleichen der gemessenen Spannung des Stromnetzes mit einer Betriebsspannung, wobei die Betriebsspannung durch die Auslegung des Offshore-Stromnetzes bestimmt ist,
- basierend auf dem Spannungsvergleich Senden eines Steuersignals an einen Stufenschalter eines Zusatztransformators, der an das Festlandnetz (23) auf seiner sekundären Seite angeschlossen ist,
- nach der Steuerung des Stufenschalters Abdämpfen der Spannungsschwankungen des Festlandstromnetzes (23).

## Revendications

1. Connexion CA comprenant
une plate-forme en mer,
un poste électrique à terre couplé à ladite plate-forme en mer,
un câble sous-marin (19) couplant ladite plate-forme en mer audit poste électrique à terre, ladite connexion CA étant couplable ou couplée à un réseau électrique à terre avec un appareillage de commutation à haute tension
dans laquelle,
ladite plate-forme en mer comprend
un réseau électrique (21) fonctionnant à moyenne tension,
un aérogénérateur (14) couplé audit réseau électrique (21),
un réacteur en dérivation (15), couplé audit réseau électrique (21) fonctionnant à moyenne tension,
un transformateur élévateur de puissance (18), positionné entre ledit réseau électrique (21) et ledit câble sous-marin (19),
**caractérisée en ce que**
ladite aérogénérateur (14), lesdits réacteur en dérivation (15) et câble sous-marin (19) de ladite connexion CA fournissent des capacités de production de puissance active et réactive permettant d'obtenir une courbe de capacité de centrale comme l'impose ledit réseau électrique à terre un parc éolien en mer branché sur ledit réseau électrique à terre.

2. Connexion CA selon la revendication 1, **caractérisée en ce que** ledit poste électrique à terre comprend ledit appareillage de commutation à haute tension.

3. Connexion CA selon la revendication 1 ou 2, **caractérisée en ce que** ladite plate-forme en mer est couplée audit câble sous-marin avec un transformateur élévateur de puissance avec un rapport fixe.

4. Connexion CA selon l'une quelconque des revendications précédentes, **caractérisée en ce que** ledit câble sous-marin (19) fonctionne à une tension constante.

5. Connexion CA selon l'une quelconque des revendications précédentes, **caractérisée en ce que** ledit poste électrique à terre comprend un transformateur-suceur (20).

6. Connexion CA selon la revendication 5, **caractérisée en ce que** ledit transformateur-suceur (20) comprend un circuit intermédiaire fonctionnant à moyenne tension.

7. Connexion CA selon la revendication 5 ou 6, **caractérisée en ce que** ledit transformateur-suceur (20) comprend un changeur de prises en charge.

8. Connexion CA selon l'une quelconque des revendications précédentes, **caractérisée en ce que** ledit poste électrique à terre comprend un système de commande de puissance réactive (16).

9. Connexion CA selon l'une quelconque des revendications précédentes, **caractérisée en ce que** ladite plate-forme en mer comprend un appareillage de commutation fonctionnant totalement à moyenne tension.

10. Utilisation d'une connexion CA selon les revendications 1 à 9, comme le moyen d'obtention d'une courbe de capacité de centrale imposée par un opérateur d'un réseau électrique à terre sur un parc éolien couplé audit réseau électrique à terre.

11. Procédé de fonctionnement d'une connexion CA selon les revendications 1 à 9, comprenant les étapes suivantes :
- fournir une connexion CA selon l'une quelconque des revendications 1 à 9, branchée sur un réseau électrique à terre (23)
- mesurer un transit de puissance active et réactive entre un parc éolien en mer et un réseau électrique à terre (23)
- comparer ledit transit de puissance réactive à un point de consigne de référence
- d'après ladite mesure de transit de puissance active et réactive et ladite comparaison de transit de puissance réactive, envoyer un signal de commande à une unité de commande (16) d'un aérogénérateur (14) et un appareillage de commutation d'un réacteur en dérivation sur ledit parc éolien en mer
- ajouter ou retirer un bloc fixe de puissance réactive dudit réacteur en dérivation lorsque ledit aérogénérateur épuise sa production de puissance réactive en une limite de capacité
- mesurer la tension d'un réseau électrique (21) sur ledit parc éolien en mer
- comparer ladite tension mesurée dudit réseau électrique avec une tension de fonctionnement où ladite tension de fonctionnement est déterminée par la conception dudit réseau électrique en mer,
- d'après ladite comparaison de tension, envoyer un signal de commande à un changeur de prises en charge d'un transformateur-suceur qui est connecté audit réseau à terre (23) au niveau de son côté secondaire,
- d'après ladite commande dudit changeur de prises en charge, amortir les variations de tension dudit réseau électrique à terre (23).
